# EUROPÄISCHE PATENTSCHRIFT

(11) **EP 4 458 536 B1**
(45) Veröffentlichungstag und Bekanntmachung des Hinweises auf die Patenterteilung: **08.10.2025**
(21) Anmeldenummer: 24171884.0
(22) Anmeldetag: 23.04.2024
(51) Int. Cl.: B27D 1/04, B27M 3/00, B27F 1/04, B27D 5/00

(54) **VERFAHREN ZUM HERSTELLEN EINER RECHTECKIGEN HOLZPLATTE AUS EINZELNEN BRETTERN UND HOLZPLATTENHERSTELLVORRICHTUNG**
METHOD FOR PRODUCING A RECTANGULAR WOOD PANEL FROM INDIVIDUAL BOARDS AND WOOD PANEL PRODUCTION DEVICE
PROCÉDÉ DE FABRICATION D'UNE PLAQUE DE BOIS RECTANGULAIRE À PARTIR DE PLANCHES INDIVIDUELLES ET DISPOSITIF DE FABRICATION DE PLAQUE DE BOIS

(30) Priorität: 03.05.2023 DE 102023111446
(43) Veröffentlichungstag der Anmeldung: 06.11.2024
(73) Patentinhaber: MINDA Industrieanlagen GmbH, 32423 Minden (DE)
(72) Erfinder: Zeddies, Dr. Hubertus, 30179 Hannover (DE)
(74) Vertreter: Gramm, Lins & Partner Patent- und Rechtsanwälte PartGmbB

(56) Entgegenhaltungen:
- EP-A2- 0 038 041
- EP-B1- 2 946 044
- US-A- 5 486 393

## Beschreibung

Die Erfindung betrifft ein Verfahren zum Herstellen einer rechteckigen Holzplatte mit in einem Winkel diagonal verlaufenden Brettern, die sich jeweils gegenüberliegende Längsseiten und Querseiten aufweisen. Gemäß einem zweiten Aspekt betrifft die Erfindung eine Holzplattenherstellvorrichtung
Aus der EP 3 797 984 A1 ist eine rechteckige Holzplatte bekannt, die aus einer Mehrzahl in Längsrichtung verlaufender Bretter besteht. Solche Holzplatten können zu einem mehrschichtigen Verbundelement miteinander verbunden werden, indem mehrere Holzplatten jeweils um 90° zueinander verdreht miteinander verbunden werden. Dadurch wird eine Brettsperrholzplatte erzeugt. Bei einer dreischichtigen Brettsperrholzplatte laufen beispielweise die Bretter der beiden äußeren Platten in Querrichtung und die Bretter der mittleren Platte in Längsrichtung der Brettsperrholzplatte. Damit kann ein stabiles Bauelement hergestellt werden, das beispielsweise als Wandelement für ein Gebäude einsetzbar ist.

Eine dreischichtige Brettsperrholzplatte ist beispielsweise aus der EP 3 797 984 A1 bekannt.

Aus der DE 92 01 177 U1 ist eine diagonal verleimte Massivholzplatte bekannt.

Werden die Bretter der Holzplatte diagonal in einer Fügestation angeordnet, miteinander verleimt und zur Herstellung einer Brettsperrholzplatte verwendet, steigt durch die sich kreuzenden Längsrichtungen der Bretter die Stabilität der Brettsperrholzplatte. Nachteilig daran ist, dass die Holzplatte nach ihrer Herstellung nicht rechtwinkelig ist, sondern die Form eines Parallelogramms hat. Um eine rechtwinklige Holzplatte zu erhalten, müssen die beiden Enden besäumt werden. Damit entsteht Abfall, der umso größer ist, je kleiner der Diagonal-Winkel α zur Längskante ist.

Die DE 697 01 362 T2 beschreibt ein Verfahren zur Herstellung eines verleimten Blocks aus im Querschnitt dreieckigen, länglichen Leisten aus Holz, die zur Ausbildung des Blocks abwechselnd mit Leisten mit ihren Basisseiten nach unten und mit Leisten mit ihren Basisseiten nach oben nebeneinander verlegt und verleimt werden. Um eine allseitig gleichförmige Oberflächenbeschaffenheit bei einer Holzverbundplatte zu erreichen, offenbart die EP 0038 041 A das folgende Verfahren: Bei einer Roh-Platte mit zeilenförmig angeordneten Holzelementen und Seitenflächen aus Längsholz wird ein solcher Plattenaufbau durch Aufteilung in Flächenabschnitte mit schräg zu den Längsholz-Seitenflächen verlaufenden Schnitt-Kantenflächen sowie anschliessendes, paarweises Verkleben der an den Flächenabschnitten verbleibenden Längsholz-Kantenflächen erreicht, und zwar in der Weise, dass für alle äusseren Kantenflächen der fertigen Platte nur noch Stirnholz verbleibt.

Hiervon ausgehend, liegt der Erfindung die Aufgabe zugrunde, eine Holzplatte mit in einem Winkel α diagonal verlaufenden Brettern herzustellen, bei der Abfall möglichst vermieden wird und die sich dazu eignet, sie zur Herstellung von Brettsperrholzplatten zu verwenden.

Die Problemlösung erfolgt gemäß einem ersten Aspekt der Erfindung durch ein Verfahren mit folgenden Schritten:
a) Besäumen der Bretter an ihren Querseiten mit einem Winkel 90°-α,
b) Transportieren eines besäumten Brettes vor eine Fügestation und Anordnen des besäumten Brettes bezogen auf eine Schieberichtung im Winkel α,
c) Beleimen des besäumten Brettes an mindestens der einen bereits in der Fügestation befindlichen Brett zugewandten Längsseite mit einem Leim,
d) Einschieben des besäumten Brettes die Fügestation mit einer Schiebeeinrichtung, wobei
e) die Schiebeeinrichtung eine Mehrzahl von Mitnehmerwagen aufweist, die bezogen auf die Schieberichtung im Winkel α angeordnet und jeweils an unterschiedlich langen Koppelstangen befestigt sind, die in Schieberichtung einen Schiebeweg ausführen, der parallel zu der Ausrichtung der Querseiten verläuft,
f) Pressen und Verkleben des eingeschobenen Brettes mit dem bereits in der Fügestation befindlichen Brett,
g) Wiederholen der Schritte b) bis f) bis eine Holzplatte gewünschter Größe erreicht ist,
h) Abtrennen eines dreieckigen Zwickels mit einem senkrecht zu den Querseiten verlaufenden Schnitt S an einem Ende der Holzplatte zur Erzeugung einer ersten rechtwinkligen Seitenkante,
i) Anleimen des abgetrennten Zwickels an dem an dem gegenüberliegenden Ende der Holzplatte, in der Art, dass sich eine zweite rechtwinklige Seitenkante ergibt.

Mit diesem Verfahren wird auf einfache und kostengünstige Weise eine rechteckige Holzplatte erhalten. Der Abfall ist auf ein Mindestmaß reduziert und wird nur durch den Sägeschnitt bestimmt. Der an einem Ende abgetrennte Zwickel wird entlang der Querseiten der Bretter, die die Längskante der Holzplatte bilden, verschoben und am gegenüberliegenden Ende der Holzplatte passend angeleimt.

Vorzugsweise wird der Zwickel betrachtet in Schieberichtung an dem vorderen Ende der Holzplatte abgetrennt. Dadurch wird die Anordnung der Säge vereinfacht, die unmittelbar hinter der Fügestation vorgesehen sein kann. Selbstverständlich kann der Zwickel aber auch am hinteren Ende abgetrennt werden.

Um eine Brettsperrholzplatte herzustellen, werden vorzugsweise folgende weitere Schritte ausgeführt:
j) Herstellen einer zweiten Holzplatte mit den Schritten a) bis i),
k) Beleimen einer Oberseite mindestens einer der Holzplatten
I) Wenden der zweiten Holzplatte um ihre Längsachse,
m) Auflegen der zweiten Holzplatte auf die Oberseite der ersten Holzplatte, so dass sich die Bretter der Holzplatten kreuzen,
n) Verpressen der beiden Holzplatten zu einer Brettsperrholzplatte.

Wenn die Fügestation groß genug ist, kann eine Brettsperrholzplatte auch mit folgenden weiteren Schritten hergestellt werden:
j) Aufteilen der Holzplatte entlang ihrer Hochachse in eine erste Teilplatte und eine zweite Teilplatte,
k) Beleimen einer Oberseite mindestens einer der Teilplatten,
I) Wenden der zweiten Teilplatte um die Hochachse,
m) Auflegen der zweiten Teilplatte auf die Oberseite der ersten Teilplatte, so dass sich die Bretter der Teilplatten kreuzen,
n) Verpressen der beiden Teilplatten zu einer Brettsperrholzplatte.

Durch das Aufteilen der Holzplatte in zwei gleich große erste und zweite Holzplatten wird die Fertigung vereinfacht. Die beiden durch die Halbierung erhaltenen Holzplatten müssen nur um die Schnittlinie (Hochachse der nicht aufgeteilten Platte) geklappt und mit den beiden Oberseiten aufeinandergelegt werden.

In Abhängigkeit der Länge der Holzplatte kann die Aufteilung auch in mehr als zwei Teilplatten erfolgen und diese können dann so miteinander verleimt werden, dass sich die Bretter aufeinander liegender Teilplatten kreuzen. Entscheidend für die Anzahl der Teilplatten ist letztendlich die gewünschte Anzahl der Diagonallagen der Brettsperrholzplatte.

Vorzugsweise werden die Bretter bei der Herstellung der Holzplatte an mindestens einer Längsseite mit einem Heißkleber beleimt. Die Verbindung wird dadurch vereinfacht, weil der geschmolzene Heißkleber durch die wesentlich kälteren Bretter beim Aneinanderlegen und Pressen rasch erkaltet und eine Haftung zwischen zwei Bretter hergestellt wird.

Um eine ausreichende Tragfestigkeit der Brettsperrholzplatte zu erhalten, werden die beiden Holzplatten bzw. die beiden Teilplatten vorzugsweise mit einem Holzkleber verleimt. Für die Berechnung der Tragfestigkeit sollte der Heißkleber zwischen den Brettern unberücksichtigt bleiben.

Wenn bei der Herstellung der Holzplatte zwischen zwei benachbarte Bretter jeweils eine, vorzugsweise gegenüber den Brettern breitere, Faserplatte eingeschoben und mit dem bereits in der Fügestation befindlichen Brett und dem nachfolgend eingeschobenen Brett verleimt wird, wird eine Verbundplatte erhalten, die sehr gute Dämmeigenschaften aufweist. Eine solche Verbundplatte kann als mittlere Lage zwischen zwei reine Holzplatten ohne Faserplatten eingelegt und mit diesen verleimt und verpresst werden. Die mit den Faserplatten versehene Holzplatte bildet eine innere Dämmschicht, während die äußeren Seiten der Verbundplatte aus Vollholz bestehen. Die Anzahl der Zwischenplatten zwischen zwei äußeren Platten ist an sich beliebig.

Dadurch, dass die Bretter in einem Winkel von 90°- α besäumt werden und bezogen auf die Schieberichtung im Winkel α vor der Fügestation angeordnet werden, kann die Fügestation eine herkömmliche Fügestation sein, in der Holzplatten mit senkrecht zur Schieberichtung angeordnete Bretter eingefügt werden.

Gemäß einem zweiten Aspekt löst die Erfindung das Problem durch eine Holzplattenherstellvorrichtung zum Herstellen einer rechteckigen Holzplatte mit
(a) einer Besäumeinrichtung, die eingerichtet ist zum Besäumen der Bretter an ihren Querseiten mit einem Winkel 90-α,
(b) einer Zuführeinrichtung, die eingerichtet ist zum Transportieren eines besäumten Brettes vor eine Fügestation und zum Anordnen des besäumten Brettes bezogen auf eine Schieberichtung im Winkel α,
(c) einer Beleimstation, die eingerichtet ist zum Beleimen des besäumten Brettes an mindestens der einen dem bereits in der Fügestation befindlichen Brett zugewandten Längsseite mit Leim,
(d) einer Schiebeeinrichtung, die eingerichtet ist zum Einschieben des besäumten Brettes in die Fügestation,
(e) wobei die Schiebeeinrichtung eine Mehrzahl von Mitnehmerwagen aufweist, die an einem Koppelbalken angeordnet sind, der dazu eingerichtet ist, in Schieberichtung einen Schiebeweg auszuführen, der parallel zu der Ausrichtung der Querseiten verläuft,
(f) der Fügestation, die eingerichtet ist zum Pressen und Verkleben des eingeschobenen Brettes mit dem bereits in der Fügestation befindlichen Brett,
(g) einer Abtrenneinrichtung, die eingerichtet ist zum Abtrennen eines dreieckigen Zwickels mit einem senkrecht zu den Querseiten verlaufenden Schnitt S an einem Ende der Holzplatte zur Erzeugung einer ersten rechtwinkligen Seitenkante,
(h) wobei die Fügestation eingerichtet ist zum Pressen und Verkleben des abgetrennten Zwickels an dem gegenüberliegenden Ende der Holzplatte, in der Art, dass sich eine zweite rechtwinklige Seitenkante ergibt.

Die Besäumeinrichtung ist beispielsweise ein Fräser oder eine Säge, insbesondere eine Kreissäge. Die Zuführeinrichtung ist beispielsweise eine Elektropalettenbahn, ein Fahrzeug, insbesondere ein autonomes Fahrzeug, ein Aufzug, ein Schachtförderer, eine Hängebahn, eine Pendelseilbahnen, eine Trolleybahn, ein Schienenförderer, eine Rollenbahn, ein Gurtbandförderer, ein Kettenförderer oder ein Unterflur-Schleppkettenförderer.

Die Schiebeeinrichtung ist beispielsweise ein Schieber, insbesondere ein mechanischer, pneumatischer oder hydraulischer Schieber.

Vorzugsweise weist die Holzplattenherstellvorrichtung eine Steuereinrichtung auf, die eingerichtet ist zum Ansteuern der Besäumeinrichtung, der Zuführeinrichtung, der Schiebeeinrichtung, der Beleimstation, der Fügestation, und der Abtrenneinrichtung, sodass die Holzplattenherstellvorrichtung automatisch das erfindungsgemäße Verfahren durchführt.

Die Abtrenneinrichtung ist beispielsweise ein Fräser oder eine Säge, insbesondere einer Kreissäge.

Bevorzugt ist die Zuführeinrichtung eingerichtet zum Transportieren des abgetrennten Zwickels in Zuführrichtung vor das letzte bereits in der Fügestation befindliche Brett.

Vorzugsweise weist die Holzplattenherstellvorrichtung eine Handhabungseinrichtung auf, die eingerichtet ist zum Bewegen des abgetrennten Zwickels in die Beleimstation. Die Handhabungseinrichtung ist beispielsweise ein Greifer, ein Heber, insbesondere Vakuumsauger oder Vakuumheber, oder ein Handhabungsroboter.

Bevorzugt ist die Beleimstation eingerichtet zum Beleimen des abgetrennten Zwickels an mindestens der einen dem bereits in der Fügestation befindlichen Brett zugewandten Längsseite mit Leim.

Vorteilhafterweise weisen die Mitnehmerwagen jeweils einen in Schieberichtung hinteren Mitnehmer und einen in Schieberichtung vorderen Mitnehmer auf, wobei die hinteren Mitnehmer und die vorderen Mitnehmer in eine Eingriffsposition und in eine Nichteingriffsposition bringbar sind, beispielsweise durch Anheben oder Absenken der vorderen und/oder hinteren Mitnehmer. Vorzugsweise sind die hinteren Mitnehmer in der Draufsicht zueinander parallel im rechten Winkel zur Schieberichtung und die vorderen Mitnehmer in der Draufsicht diagonal im Winkel α angeordnet.

Mit Hilfe einer Zeichnung soll die Erfindung nachfolgend näher beschrieben werden. Es zeigt
- Figur 1a: die schematische Darstellung des Legens einzelner Bretter in einer Fügestation;
- Figur 1b: die schematische Darstellung des Legens einzelner Bretter mit schematisch dargestellter Bedienstation;
- Figur 1c: den Schnitt entlang der Linie Ic - Ic in Figur 1b;
- Figur 2a: eine gelegte Holzplatte mit einer Parallelogramm-Fläche;
- Figur 2b: eine gelegte Holzplatte mit zwischenliegenden Faserplatten und einer Parallelogramm-Fläche;
- Figur 3a: die Holzplatte nach Figur 2a nach dem sie eine rechteckige Fläche erhalten hat;
- Figur 3b: eine weitere Holzplatte;
- Figur 4a: die schematische Darstellung des Legens einzelner Bretter in einer Fügestation zum Durchführen einer zweiten Ausführungsform eines erfindungsgemäßen Verfahrens;
- Figur 4b: die schematische Darstellung des Legens einzelner Bretter mit schematisch dargestellter Bedienstation und
- Figur 4c: den Schnitt entlang der Linie Ic - Ic in Figur 4b.

Damit die Holzplatten 10, 20 mit in einem Winkel α diagonal verlaufenden Brettern in einer herkömmlichen Fügestation F hergestellt werden können, müssen die Bretter 1, 2, 3, ... x zunächst an ihren sich gegenüberliegenden Längsseiten 1.1, 1.2, 2.1, 2.2, 3.1, 3.2, ...x.1, x.2 im Winkel 90°-α besäumt werden.

Dann werden die Bretter 1, 2, 3, ..., x-1, x in die Fügestation F transportiert und hier bezogen auf die Schieberichtung Rs im Winkel α positioniert. Der Transport erfolgt über eine Zuführeinrichtung 32, die zum Beispiel als Förderband oder Rollenförderer ausgebildet sein kann.

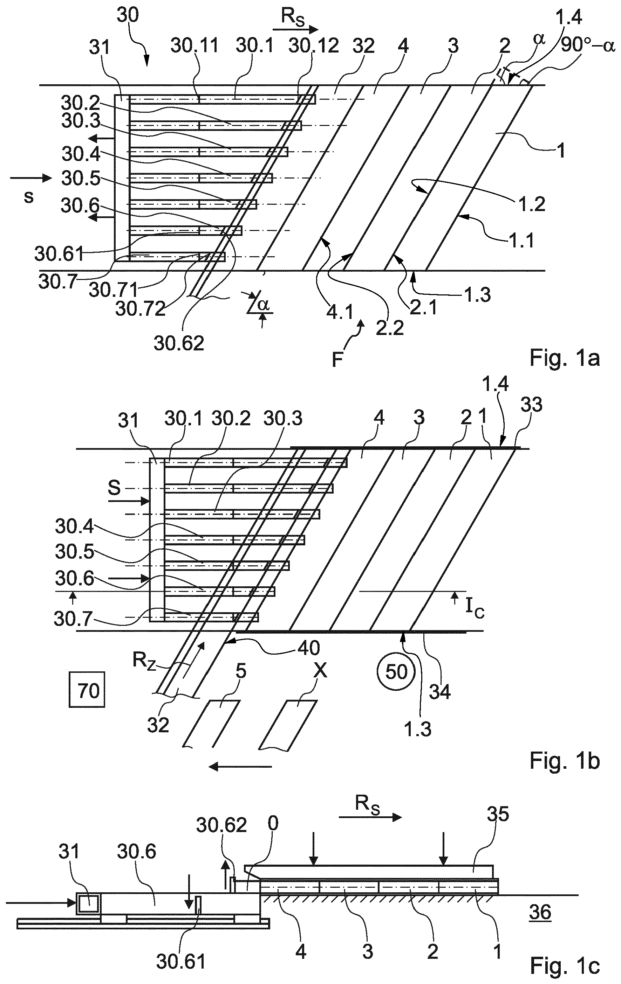

Vor der Fügestation F sind eine Mehrzahl Mitnehmerwagen 30.1, 30.2, 30.3, 30.4, 30.5, 3.6, 30.7 angeordnet, die bezogen auf die Schieberichtung Rs ebenfalls im Winkel α stehen. Jeder der Mitnehmerwagen 30.1, 30.2, 30.3, 30.4, 30.5, 3.6, 30.7 ist an einem Koppelbalken 31 befestigt und über diesen parallel zur Schieberichtung Rs verschiebbar, um einen Schiebeweg s. Der Schiebeweg s verläuft auch parallel zu der Ausrichtung der Querseiten 1.3, 1.4, 2.3, 2.4, 3.3, 3.4, ... x.3, x.4, wie Figuren 1a und 1b entnehmbar ist.

Senkrecht zur Schieberichtung s wird die Fügestation F begrenzt von einem verstellbaren Lineal 33 (siehe Figur 1c) und einem festen Lineal 34, um unterschiedliche Längen der Bretter berücksichtigen zu können. Die Bretter 1, 2, 3, ...x liegen auf einem Gleittisch 36 und werden auf diesem über eine Andruckschiene 35 fixiert. Der Koppelbalken 31 kann zum Beispiel motorisch, hydraulisch oder pneumatisch angetrieben werden.

Wie den Figuren 1a und 1b entnehmbar ist, sind die Mitnehmerwagen 30.1, 30.2, ... 30.7 unterschiedlich lang ausgebildet, um den im Winkel α diagonal verlaufenden Brettern 1, 2, 3, ...x Rechnung zu tragen.

Zunächst wird ein erstes Brett 1 vor der Fügestation F angeordnet und dann über die über die Zuführeinrichtung 32 zu den Mitnehmerwagen 30.1, 30.2, 30.3, 30.4, 30.5, 3.6, 30.7 geführt, von denen es gleichzeitig in Schieberichtung Rs in die Fügestation F eingeschoben wird. Die Mitnehmerwagen 30.1, 30.2, 30.3, 30.4, 30.5, 30.6, 30.7 legen dabei alle denselben Schiebeweg s zurück, bis das erste Brett 1 in der Endposition, die durch einen Anschlag A gebildet wird, angelangt ist. Dann wird ein zweites Brett 2 vor der Fügestation F positioniert und an seiner bezogen auf die Schieberichtung Rs vordere Längsseite 2.1 an der Beleimstation 40 mit einem geschmolzenen Heißkleber bestrichen, über die Zuführeinrichtung 32 zugeführt und dann mittels der Schiebeeinrichtung 30 in die Fügestation F eingeschoben, bis es an die hintere Längsseite1.2 des ersten Brettes 1 anstößt. Dabei härtet der Heißkleber rasch aus, insbesondere auch deshalb, weil das erste Brett 1 deutlich kälter ist als der Heißkleber. Diese Vorgänge werden solange wiederholt, bis das letzte Brett x in die Fügestation F eingeschoben wurde und eine Holzplatte 10 gewünschter Größe hergestellt wurde.

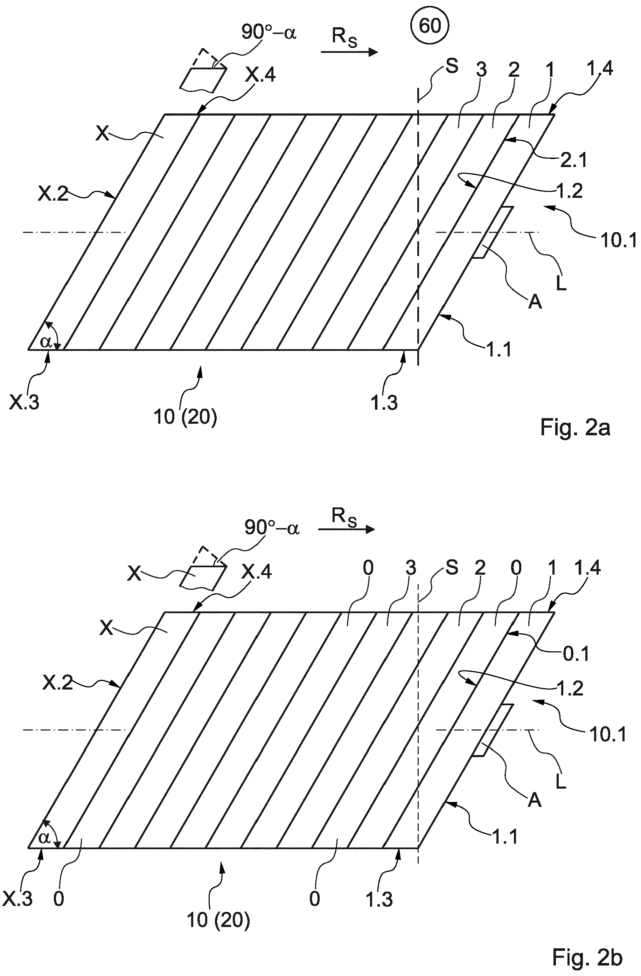

Diese Holzplatte 10 hat wie Figur 2A zeigt, die Fläche eines Parallelogramms. Die Holzplatte 10 wird aus der Fügestation F heraustransportiert und nun wird am in Schieberichtung Rs betrachtet vorderen Ende ein Zwickel 10.1 mittels einer Abtrenneinrichtung 60, beispielsweise in Form einer Säge, insbesondere einer Kreissäge, abgetrennt, in dem bezogen auf die Schieberichtung Rs bzw. auf die Querseiten 1.3, 1.4; 2.3, 2.4; 3.3, 3.; ... x.3, x.4 ein senkrecht verlaufender Sägeschnitt S durchgeführt wird. Dieser dreieckige Zwickel 10.1 wird an das hintere Ende der Holzplatte 10 angeleimt, indem die bezogen auf die Schieberichtung Rs vordere Längsseite 1.1 mit einem geschmolzenen Heißkleber, vorzugsweise, zur Verbesserung der statischen Eigenschaften, aber mit einem Holzleim bestrichen wird und an die Längsseite x.2 des letzten Brettes x angeleimt wird.

Um eine Brettsperrholzplatte herzustellen, wird in derselben Art wie vorstehend beschrieben eine zweite Holzplatte 20 hergestellt. Dann wird mindestens eine Oberseite der Holzplatten 10, 20 mit einem Holzleim beleimt. Die zweite Holzplatte 20 wird um ihre Längsachse L um 180° gewendet und dann mit ihrer Oberseite auf die Oberseite der ersten Holzplatte 10 aufgelegt, so dass sich die Bretter 1, 2, 3, ...x der beiden Holzplatten 10, 20 kreuzen und die beiden Holzplatten 10, 20 werden dann zu einer Brettsperrholzplatte verpresst.

Wenn die Fügestation F lang genug ausgebildet ist, kann eine Brettsperrholzplatte auch aus einer einzige Holzplatte 10 hergestellt werden, indem die rechteckige Holzplatte 10 entlang ihrer Hochachse H₁₀ in zwei Teilplatten 101, 102 halbiert wird. Die Oberseite mindestens einer Teilplatte 101, 102 wird mit Holzleim bestrichen, die zweite Teilplatte 102 dann um 180° um die Hochachse H₁₀ geklappt, so dass ihre Oberseite auf die Oberseite der ersten Teilplatte 101 zur Auflage gelangt und die beiden Teilplatten 101, 102 werden dann miteinander verpresst.

Nach den beiden vorstehend beschriebenen Methoden können Brettsperrholzplatten beliebiger Stärke hergestellt werden. Es ist nur immer darauf zu achten, dass sich die Bretter aneinander angrenzender Holzplatten kreuzen.

Die Mitnehmerwagen 30.1, 30.2, ...30.7 weisen jeweils einen ersten, in Schieberichtung s hinteren Mitnehmer 30.11, ...30.71 und einen in Schieberichtung vorderen Mitnehmer 30.12, ...30.72 auf. Die Mitnehmer 30.11, ...30.71; 30.12, ... 30.72 können angehoben und abgesenkt werden. Um die Bretter 1, 2, ...x in Schieberichtung Rs einschieben zu können, werden die vorderen Mitnehmer 30.12, ... 30.62, 30.72 angehoben. Sie greifen dann an die in Schieberichtung Rs hintere Längsseite 1.2, 2.2, ...x.2 an, um die Bretter 1, 2, 3, ...x in die Fügestation F einzuschieben. Die hinteren Mitnehmer 30.11, ... 30.61, 30.71 sind dabei abgesenkt (vgl. Figur 1c).

Wie Figur 1a erkennen lässt, sind die vorderen Mitnehmer 30.12, ... 30.72 in der Draufsicht diagonal im Winkel α angeordnet. Die hinteren Mitnehmer 30.11, ... 30.71 sind in der Draufsicht zueinander parallel im rechten Winkel zur Schieberichtung Rs angeordnet. Sie dienen dazu, den am vorderen Ende der Holzplatte 10 abgetrennten Zwickel 10.1 an das hintere Ende anzusetzen. Zu diesem Zweck werden die hinteren Mitnehmer 30.11, ... 30.71 angehoben und die vorderen Mitnehmer 30.12, ... 30.72 abgesenkt.

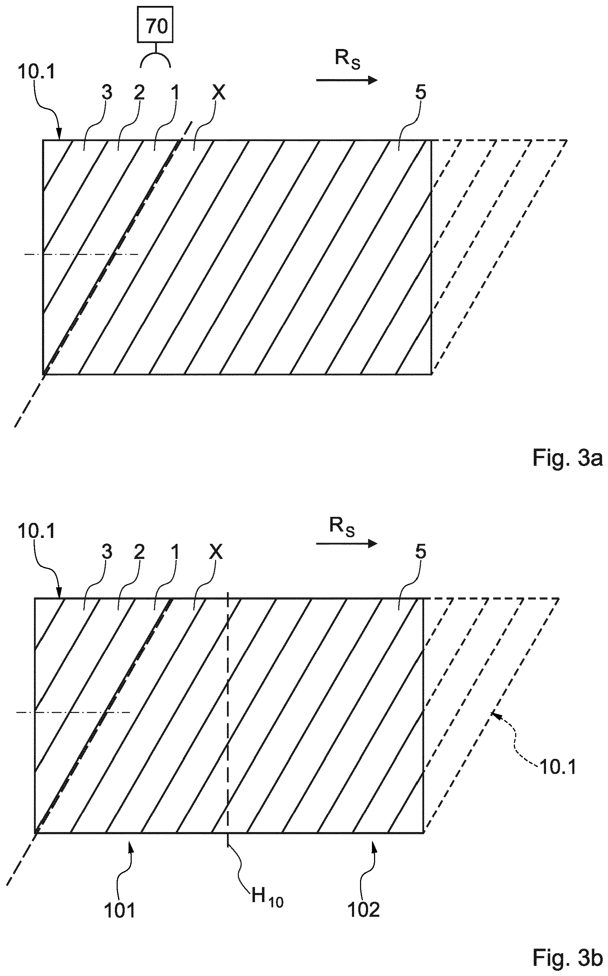

Der abgetrennte Zwickel 10.1 kann über eine Handhabungseinrichtung 80 (siehe Figur 3) bewegt werden. Beispielsweise kann ein Vakuumsauger vorgesehen sein, der den abgetrennten Zwickel 10.1 anhebt und in die Beleimstation 40 transferiert und dort absenkt. Dort wird die vordere Seitenkante 1.1 des Brettes 1 beleimt und der Zwickel 10.1 über die Zuführeinrichtung 32 in Zuführrichtung Rz vor das letzte Brett x gebracht. Über die Mitnehmer 30.11, ... 30.71 wird der Zwickel 10.1 dann in Schieberichtung Rs gegen das letzte Brett x geschoben und mit diesem verpresst.

Eine Steuereinrichtung 70 (siehe Figur 1b) ist eingerichtet zum Ansteuern einer Besäumeinrichtung 50, der Zuführeinrichtung 32, der Schiebeeinrichtung 30, der Beleimstation 40, der Fügestation F, und der Abtrenneinrichtung 60, sodass die Holzplattenherstellvorrichtung automatisch das erfindungsgemäße Verfahren durchführt.

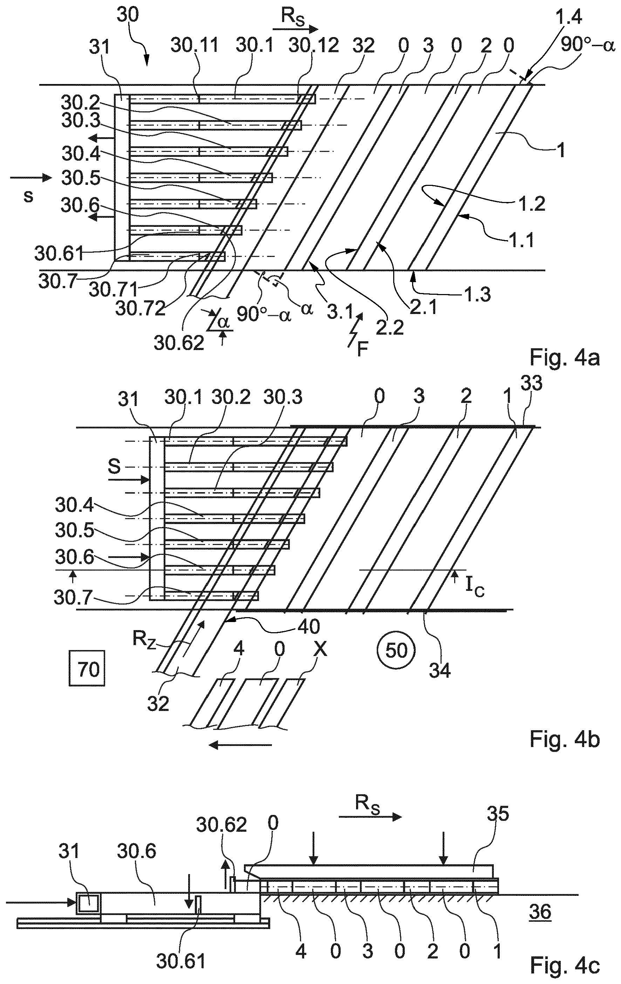

Wie die Figuren 2b und 4a, 4b und 4c zeigen, kann zwischen jedes Brett 1, 2, 3, 4... x-1, x eine Faserplatte 0 eingelegt werden, die breiter ausgebildet sein kann, als die Bretter 1, 2, 3,...x. Die Verbindung zwischen den Brettern 1, 2, 3, ... x und den Faserplatten erfolgt genauso, wie die Verbindung zwischen den Brettern 1, 2... wie vorstehend beschrieben. Die in Schieberichtung Rs vordere Längsseite 0.1 einer Faserplatte 0 wird mit einem Heißkleber bestrichen und gegen die hintere Seitenkante 1.2 eines in der Fügestation F bereits angeordneten Brettes 1 angeschoben.

Es werden vorzugsweise immer abwechselnd Bretter und Faserplatter miteinander verklebt. Am Anfang und am Ende wird vorzugsweise jeweils ein Brett 1, x vorgesehen, um einen massiven Abschluss der Platte zu erhalten. Eine oder mehrere solcher Platten können als Dämmplatte in der mittleren Lage in einer Brettsperrholzplatte verwendet werden. Die beiden Deckseite werden vorzugsweise aus einer reinen, nur aus Brettern 1, 2, 3, ... x bestehenden Holzplatte 10, 20; 101, 102 gebildet.

Wenn die Fügestation F lang genug ausgebildet ist, kann eine Holzplatte 10, die Faserplatten 0 aufweist, auch entlang ihrer Hochachse H₁₀ in zwei Teilplatten halbiert und entsprechend doppelt benutzt werden.

**Bezugszeichenliste**

| | | | |
|---|---|---|---|
| 0 | Faserplatte | 30 | Schiebeeinrichtung |
| 0.1 | Längsseite | 30.1 | Mitnehmerwagen |
| 1 | Brett | 30.2 | Mitnehmerwagen |
| 1.1 | Längseite | 30.3 | Mitnehmerwagen |
| 1.2 | Längsseite | 30.4 | Mitnehmerwagen |
| 1.3 | Querseite | 30.5 | Mitnehmerwagen |
| 1.4 | Querseite | 30.6 | Mitnehmerwagen |
| 2 | Brett | 30.7 | Mitnehmerwagen |
| 2.1 | Längsseite | 30.11 | Mitnehmer |
| 2.2 | Längsseite | 30.12 | Mitnehmer |
| 2.3 | Querseite | 30.61 | Mitnehmer |
| 2.4 | Querseite | 30.62 | Mitnehmer |
| 3 | Brett | 30.71 | Mitnehmer |
| 3.1 | Längsseite | 30.72 | Mitnehmer |
| 3.2 | Längsseite | 31 | Koppelbalken |
| 3.3 | Querseite | 32 | Zuführeinrichtung |
| 3.4 | Querseite | 33 | verstellbares Lineal |
| 4 | Brett | 34 | festes Lineal |
| 4.1 | Längsseite | 35 | Andruckschiene |
| 4.2 | Längsseite | 36 | Gleittisch |
| 4.3 | Querseite | 40 | Beleimstation |
| 4.4 | Querseite | 50 | Besäumeinrichtung |
| 5 | Brett | 60 | Abtrenneinrichtung |
| ... | | 70 | Steuereinrichtung |
| x-1 | Brett | 80 | Handhabungseinrichtung |
| x | Brett | 101 | Teilplatten |
| x.1 | Längsseite | 102 | Teilplatten |
| x.2 | Längsseite | | |
| x.3 | Querseite | A | Anschlag |
| x.4 | Querseite | F | Fügestation |
| | | H₁₀ | Hochachse |
| 10 | Holzplatte | L | Längsachse |
| 10.1 | Zwickel | R_{S} | Schieberichtung |
| 20 | Holzplatte | R_{Z} | Zuführrichtung |
| S | Sägeschnitt | | |
| s | Schiebeweg | | |
| α | Winkel | | |

## Patentansprüche

1. Verfahren zum Herstellen einer rechteckigen Holzplatte (10) mit in einem Winkel (α) diagonal verlaufenden Brettern (1, 2, 3, ...x), die sich jeweils gegenüberliegende Längsseiten (1.1, 1.2; 2.1, 2.2; 3.1, 3.2, ...x.1, x.2) und Querseiten (1.3, 1.4; 2.3, 2.4; 3.3, 3.4, ...x.3, x.4) aufweisen, mit folgenden Schritten:
(a) Besäumen der Bretter (1, 2, 3, ...) an ihren Querseiten (1.3, 1.4; 2.3, 2.4; 3.3, 3.4, ... x.3, x.4) mit einem Winkel (90°-α),
(b) Transportieren eines besäumten Brettes (2) vor eine Fügestation (F) und Anordnen des besäumten Brettes (2) bezogen auf eine Schieberichtung (Rs) im Winkel (α),
(c) Beleimen des besäumten Brettes (2) an mindestens der einen dem bereits in der Fügestation (F) befindlichen Brett (1) zugewandten Längsseite (2.1) mit einem Leim,
(d) Einschieben des besäumten Brettes (2) in die Fügestation (F) mit einer Schiebeeinrichtung (30), wobei
(e) die Schiebeeinrichtung (30) eine Mehrzahl von Mitnehmerwagen (30.1, 30.2, 30.3, 30.4, 30.5, 30.6, 30.7) aufweist, die an einem Koppelbalken (31) angeordnet sind, der in Schieberichtung (Rs) einen Schiebeweg (s) ausführt, der parallel zu der Ausrichtung der Querseiten (1.3, 1.4; 2.3, 2.4; 3.3, 3.4, ...) verläuft,
(f) Pressen und Verkleben des eingeschobenen Brettes (2) mit dem bereits in der Fügestation (F) befindlichen Brett (1),
(g) Wiederholen der Schritte b) bis f) bis eine Holzplatte (10) gewünschter Größe erreicht ist,
(h) Abtrennen eines dreieckigen Zwickels (10.1) mit einem senkrecht zu den Querseiten (1.3, 1.4; 2.3, 2.4; 3.3, 3.4, ... x.3, x.4) verlaufenden Schnitt S an einem Ende der Holzplatte (10) zur Erzeugung einer ersten rechtwinkligen Seitenkante,
(i) Anleimen des abgetrennten Zwickels (10.1) an dem gegenüberliegenden Ende der Holzplatte (10), in der Art, dass sich eine zweite rechtwinklige Seitenkante ergibt.

2. Verfahren nach Anspruch 1, **dadurch gekennzeichnet, dass** der Zwickel (10.1) in Schieberichtung (Rs) betrachtet an dem vorderen Ende der Holzplatte (10) abgetrennt wird.

3. Verfahren nach Anspruch 1 oder 2, **dadurch gekennzeichnet, dass** folgende weitere Schritte ausgeführt werden:
(j) Herstellen einer zweiten Holzplatte (20) mit den Schritten a) bis i),
(k) Beleimen einer Oberseite mindestens einer der Holzplatten (10, 20)
(I) Wenden der zweiten Holzplatte (20) um ihre Längsachse (L),
(m) Auflegen der zweiten Holzplatte (20) auf die Oberseite der ersten Holzplatte (10), so dass sich die Bretter (1, 2, 3, ...) der Holzplatten (10, 20) kreuzen,
(n) Verpressen der beiden Holzplatten (10, 20) zu einer Brettsperrholzplatte.

4. Verfahren nach Anspruch 1 oder 2, **dadurch gekennzeichnet, dass** folgende weitere Schritte ausgeführt werden:
(j) Aufteilen der Holzplatte (10) entlang ihrer Hochachse (H₁₀) in eine erste Teilplatte (101) und eine zweite Teilplatte (102),
(k) Beleimen einer Oberseite mindestens einer der Teilplatten (101, 102),
(l) Wenden der zweiten Teilplatte (102) um die Hochachse (H₁₀),
(m) Auflegen der zweiten Teilplatte (102) auf die Oberseite der ersten Teilplatte (101), so dass sich die Bretter der Teilplatten (101, 102) kreuzen,
(n) Verpressen der beiden Teilplatten (101, 102) zu einer Brettsperrholzplatte.

5. Verfahren nach einem der vorstehenden Ansprüche, **dadurch gekennzeichnet, dass** im Schritt (c) die mindestens eine Längsseite (2.1, 3.1, ...x.1) mit einem Heißkleber beleimt wird.

6. Verfahren nach einem der vorstehenden Ansprüche, **dadurch gekennzeichnet, dass** die mindestens zwei Holzplatten (10, 20) oder die beiden Teilplatten (101, 102) mit einem Holzkleber verleimt werden.

7. Verfahren nach einem der vorstehenden Ansprüche, **dadurch gekennzeichnet, dass** zwischen zwei benachbarte Bretter (1, 2, 3, ...x-1, x) eine Faserplatte (0) eingeschoben und mit dem bereits in der Fügestation (F) befindlichen Brett (x-1) und dem anschließend in Schritt d) eingeschobenen Brett (x verleimt wird.

8. Verfahren nach Anspruch 6, **dadurch gekennzeichnet, dass** die Faserplatte (0) breiter ist als die Bretter (1, 2, 3, ...x-1, x).

9. Verfahren nach Anspruch 7 oder 8, **dadurch gekennzeichnet, dass** die mit den Faserplatten (0) versehenen Holzplatten (10, 20; 101, 102) zwischen zwei ohne Faserplatten (0) versehene Holzplatten (10, 20; 101, 102) eingelegt und mit diesen verleimt und verpresst werden.

10. Holzplattenherstellvorrichtung zum Herstellen einer rechteckigen Holzplatte (10) mit
(a) einer Besäumeinrichtung (50), die eingerichtet ist zum Besäumen der Bretter (1, 2, 3, ...) an ihren Querseiten (1.3, 1.4; 2.3, 2.4; 3.3, 3.4, ... x.3, x.4) mit einem Winkel (90°-α),
(b) einer Zuführeinrichtung (32), die eingerichtet ist zum Transportieren eines besäumten Brettes (2) vor eine Fügestation (F) und zum Anordnen des besäumten Brettes (2) bezogen auf eine Schieberichtung (Rs) im Winkel (α),
(c) einer Beleimstation (40), die eingerichtet ist zum Beleimen des besäumten Brettes (2) an mindestens der einen dem bereits in der Fügestation (F) befindlichen Brett (1) zugewandten Längsseite (2.1) mit Leim,
(d) einer Schiebeeinrichtung (30), die eingerichtet ist zum Einschieben des besäumten Brettes (2) in die Fügestation (F),
(e) wobei die Schiebeeinrichtung (30) eine Mehrzahl von Mitnehmerwagen (30.1, 30.2, 30.3, 30.4, 30.5, 30.6, 30.7) aufweist, die an einem Koppelbalken (31) angeordnet sind, der dazu eingerichtet ist, in Schieberichtung (Rs) einen Schiebeweg (s) auszuführen, der parallel zu der Ausrichtung der Querseiten (1.3, 1.4; 2.3, 2.4; 3.3, 3.4; ...) verläuft,
(f) der Fügestation (F), die eingerichtet ist zum Pressen und Verkleben des eingeschobenen Brettes (2) mit dem bereits in der Fügestation (F) befindlichen Brett (1),
(g) einer Abtrenneinrichtung (60), die eingerichtet ist zum Abtrennen eines dreieckigen Zwickels (10.1) mit einem senkrecht zu den Querseiten (1.3, 1.4; 2.3, 2.4; 3.3, 3.4; ... x.3, x.4) verlaufenden Schnitt S an einem Ende der Holzplatte (10) zur Erzeugung einer ersten rechtwinkligen Seitenkante,
(h) wobei die Fügestation (F) eingerichtet ist zum Pressen und Verkleben des abgetrennten Zwickels (10.1) an dem gegenüberliegenden Ende der Holzplatte (10), in der Art, dass sich eine zweite rechtwinklige Seitenkante ergibt.

11. Holzplattenherstellvorrichtung nach Anspruch 10, **gekennzeichnet durch** eine Steuereinrichtung (70), die eingerichtet ist zum Ansteuern der Besäumeinrichtung (50), der Zuführeinrichtung (32), der Schiebeeinrichtung (30), der Beleimstation (40), der Fügestation (F), und der Abtrenneinrichtung (60), sodass die Holzplattenherstellvorrichtung automatisch ein Verfahren nach einem der Ansprüche 1 bis 9 durchführt.

12. Holzplattenherstellvorrichtung nach einem der Anspürche 10 oder 11, **dadurch gekennzeichnet, dass** die Zuführeinrichtung (32) eingerichtet ist zum Transportieren des abgetrennten Zwickels (10.1) in Zuführrichtung (Rz) vor das letzte bereits in der Fügestation (F) befindliche Brett (x).

13. Holzplattenherstellvorrichtung nach einem der Ansprüche 10 bis 12,
**gekennzeichnet durch**
(a) einer Handhabungseinrichtung (80), die eingerichtet ist zum Bewegen des abgetrennten Zwickels (10.1) in die Beleimstation (40),
(b) wobei die Beleimstation (40) eingerichtet ist zum Beleimen des abgetrennten Zwickels (10.1) an mindestens der einen dem bereits in der Fügestation (F) befindlichen Brett (1) zugewandten Längsseite mit einem Leim.

14. Holzplattenherstellvorrichtung nach einem der Ansprüche 10 bis 13, **dadurch gekennzeichnet, dass** die Mitnehmerwagen (30.1, 30.2, 30.3, 30.4, 30.5, 30.6, 30.7) jeweils einen in Schieberichtung (Rs) hinteren Mitnehmer (30.11, ... 30.71) und einen in Schieberichtung (Rs) vorderen Mitnehmer (30.12, ... 30.72) aufweisen, wobei die hinteren Mitnehmer (30.11, ... 30.71) und die vorderen Mitnehmer (30.12, ... 30.72) in eine Eingriffsposition und in eine Nichteingriffsposition bringbar sind, wobei die hinteren Mitnehmer (30.11, ... 30.71) in der Draufsicht zueinander parallel im rechten Winkel zur Schieberichtung (Rs) und die vorderen Mitnehmer (30.12, ... 30.72) in der Draufsicht diagonal im Winkel (α) angeordnet sind.

## Claims

1. A method for producing a rectangular wooden panel (10) with boards (1, 2, 3, ...x) extending diagonally at an angle (α), each of which has opposite longitudinal sides (1.1, 1.2; 2.1, 2.2; 3.1, 3.2,... x.1, x.2) and transverse sides (1.3, 1.4; 2.3, 2.4; 3.3, 3.4, ...x.3, x.4) comprising the following steps:
(a) trimming the transverse sides (1.3, 1.4; 2.3, 2.4; 3.3, 3.4, ... x.3, x.4) of the boards (1, 2, 3, ...) at an angle (90°-α),
(b) transporting a trimmed board (2) to in front of a joining station (F) and arranging the trimmed board (2) at angle (α) in relation to a direction of placement (R_{S}),
(c) glueing the trimmed board (2) to at least the longitudinal side (2.1) facing (1) the board already located in the joining station (F),
(d) inserting the trimmed board (2) into the joining station (F) with a placement device (30), wherein
(e) the placement device (30) comprises a plurality of towing trolleys (30.1, 30.2, 30.3, 30.4, 30.5, 30.6, 30.7) that are arranged on a coupling bar (31) which travels a placement path (s) in the placement direction (Rs), said path running parallel to the orientation of the transverse sides (1.3, 1.4; 2.3, 2.4; 3.3, 3.4,...),
(f) pressing and glueing the inserted board (2) to the board (1) already in the joining station (F),
(g) repeating steps b) to f) until a wooden panel (10) of the desired size is achieved,
(h) cutting off a triangular gusset (10.1) with a cut S running perpendicular to the transverse sides (1.3, 1.4; 2.3, 2.4; 3.3, 3.4, ... x.3, x.4) at one end of the wooden panel (10) to produce a first right-angled side edge,
(i) glueing on the cut-off gusset (10.1) at the opposite end of the wooden panel (10) such that a second right-angled side edge is produced.

2. The method according to claim 1, **characterised in that** the gusset (10.1) is cut off at the front end of the wooden panel (10), viewed in the direction of placement (Rs).

3. The method according to claim 1 or 2, **characterised in that** the following further steps are carried out:
(j) producing a second wooden panel (20) according to steps a) to i),
(k) glueing an upper side of at least one of the wooden panels (10, 20),
(l) turning the second wooden panel (20) about its longitudinal axis (L),
(m) laying the second wooden panel (20) on the upper side of the first wooden panel (10) so that the boards (1, 2, 3, ...) of the wooden panels (10, 20) cross,
(n) pressing the two wooden panels (10, 20) to produce a cross-laminated timber panel.

4. The method according to claim 1 or 2, **characterised in that** the following further steps are carried out:
(j) dividing the wooden panel (10) along its vertical axis (H₁₀) into a first partial panel (101) and a second partial panel (102),
(k) glueing an upper side of at least one of the partial panels (101, 102),
(l) turning the second partial panel (102) about the vertical axis (H₁₀),
(m) laying the second partial panel (102) on the upper side of the first partial panel (101) so that the boards of the partial panels (101, 102) cross,
(n) pressing the two partial panels (101, 102) to produce a cross-laminated timber panel.

5. The method according to one of the preceding claims, **characterised in that** in step (c) a hot-melt adhesive is applied to the at least one longitudinal side (2.1, 3.1, ...x.1).

6. The method according to one of the preceding claims, **characterised in that** the at least two wooden panels (10, 20) or the two partial panels (101, 102) are glued with a hot-melt adhesive.

7. The method according to one of the preceding claims, **characterised in that** a fibreboard (0) is inserted between two adjacent boards (1, 2, 3, ...x-1, x) and glued to the board (x-1) already in the joining station (F) and the board (x) subsequently inserted in step d).

8. The method according to claim 6, **characterised in that** the fibreboard (0) is wider than the boards (1, 2, 3, ...x-1, x).

9. The method according to claim 7 or 8, **characterised in that** the wooden panels (10, 20; 101, 102) equipped with the fibreboards (0) are inserted between two wooden panels (10, 20; 101, 102) without fibreboards (0) and are glued and pressed together with them.

10. A wooden panel production device for producing a rectangular wooden panel (10) with
(a) a trimming device (50), which is configured to trim the transverse sides (1.3, 1.4; 2.3, 2.4; 3.3, 3.4, ... x.3, x.4) of the boards (1, 2, 3, ...) at an angle (90°-α),
(b) a feed device (32), which is configured to transport a trimmed board (2) to in front of a joining station (F) and arranging the trimmed board (2) at angle (α) in relation to a direction of placement (Rs),
(c) a glueing station (40), which is configured to glue the trimmed board (2) to at least the longitudinal side (2.1) facing the board (1) already located in the joining station (F),
(d) a placement device (30), which is configured to insert the trimmed board (2) into the joining station (F),
(e) wherein the placement device (30) comprises a plurality of towing trolleys (30.1, 30.2, 30.3, 30.4, 30.5, 30.6, 30.7) that are arranged on a coupling bar (31) that is configured to travel a placement path (s) in the placement direction (Rs), said path running parallel to the orientation of the transverse sides (1.3, 1.4; 2.3, 2.4; 3.3, 3.4,...),
(f) the joining station (F), which is configured to press and glue the inserted board (2) to the board (1) already in the joining station (F),
(g) a cut-off device (60), which is configured to cut off a triangular gusset (10.1) with a cut S running perpendicular to the transverse sides (1.3, 1.4; 2.3, 2.4; 3.3, 3.4, ... x.3, x.4) at one end of the wooden panel (10) to produce a first right-angled side edge,
(h) wherein the joining station (F) is configured to press and glue the cut-off gusset (10.1) to the opposite end of the wooden panel (10) such that a second right-angled side edge is produced.

11. The wooden panel production device according to claim 10, **characterised by** a control device (70), which is configured to control the trimming device (50), the feed device (32), the placement device (30), the glueing station (40), the joining station (F) and the cut-off device (60) such that the wooden panel production device automatically carries out a method according to one of the claims 1 to 9.

12. The wooden panel production device according to one of the claims 10 or 11, **characterised in that** the feed device (32) is configured to transport the cut-off gusset (10.1) in the feed direction (Rz) to in front of the last board (x) in the joining station (F).

13. The wooden panel production device according to one of the claims 10 to 12, **characterised by**
(a) a handling device (80), which is configured to move the cut-off gusset (10.1) into the glueing station (40),
(b) wherein the glueing station (40) is configured to glue the cut-off gusset (10.1) to at least the longitudinal side facing the board (1) already located in the joining station (F),

14. The wooden panel production device according to one of the claims 10 to 13, **characterised in that** the towing trolleys (30.1, 30.2, 30.3, 30.4, 30.5, 30.6, 30.7) each have a rear towing arm (30.11, ... 30.71) in the direction of placement and a front towing arm (30.12, ... 30.72) in the direction of placement (Rs), wherein the rear towing arms (30.11,... 30.71) and the front towing arms (30.12, ... 30.72) can be brought into an engagement position and a non-engagement position, wherein the rear towing arms (30.11, ... 30.71) are arranged parallel to each other at a right angle to the direction of placement (Rs) when viewed from above and the front towing arms (30.12, ... 30.72) are arranged diagonally at an angle (α) when viewed from above.

## Revendications

1. Procédé de fabrication d'une plaque de bois (10) rectangulaire comprenant des planches (1, 2, 3, ...x) disposées en diagonale selon un angle (α), qui présentent des côtés longitudinaux (1.1, 1.2 ; 2.1, 2.2 ; 3.1, 3.2, ... x.1, x.2) et des côtés transversaux (1.3, 1.4 ; 2.3, 2.4 ; 3.3, 3.4, ... x.3, x.4) respectivement opposés, comprenant les étapes suivantes consistant à :
(a) déligner les planches (1, 2, 3, ...) sur leurs côtés transversaux (1.3, 1.4 ; 2.3, 2.4 ; 3.3, 3.4, ... x.3, x.4) selon un angle (90°-α),
(b) transporter une planche délignée (2) devant un poste d'assemblage (F) et placer la planche délignée (2) selon l'angle (α) par rapport à une direction d'insertion (Rs),
(c) encoller la planche délignée (2) au moins sur le côté longitudinal (2.1) tourné vers la planche (1) déjà présente dans le poste d'assemblage (F), avec une colle,
(d) insérer la planche délignée (2) dans le poste d'assemblage (F) à l'aide d'un dispositif d'insertion (30),
(e) le dispositif d'insertion (30) comportant une pluralité de chariots entraîneurs (30.1, 30.2, 30.3, 30.4, 30.5, 30.6, 30.7) disposés sur une poutre de couplage (31) qui parcourt dans la direction d'insertion (Rs) un trajet d'insertion (s) parallèle à l'orientation des côtés transversaux (1.3, 1.4 ; 2.3, 2.4 ; 3.3, 3.4, ...),
(f) presser et coller la planche insérée (2) à la planche (1) déjà présente dans le poste d'assemblage (F),
(g) répéter les étapes b) à f) jusqu'à obtenir une plaque de bois (10) de la taille souhaitée,
(h) découper un gousset triangulaire (10.1) par une coupe S perpendiculaire aux côtés transversaux (1.3, 1.4 ; 2.3, 2.4 ; 3.3, 3.4, ... x.3, x.4) à une extrémité de la plaque de bois (10) pour produire un premier bord latéral à angle droit,
(i) coller le gousset découpé (10.1) à l'extrémité opposée de la plaque de bois (10) de manière à obtenir un deuxième bord latéral à angle droit.

2. Procédé selon la revendication 1, **caractérisé en ce que** le gousset (10.1), vu en direction d'insertion (Rs), est découpé à l'extrémité avant de la plaque de bois (10).

3. Procédé selon la revendication 1 ou 2, **caractérisé en ce qu'il** est prévu les étapes supplémentaires suivantes consistant à :
(j) fabriquer une deuxième plaque de bois (20) par les étapes a) à i),
(k) encoller une face supérieure de l'une au moins des plaques de bois (10, 20),
(l) retourner la deuxième plaque de bois (20) autour de son axe longitudinal (L),
(m) poser la deuxième plaque de bois (20) sur la face supérieure de la première plaque de bois (10) de manière à ce que les planches (1, 2, 3, ...) des plaques de bois (10, 20) se croisent,
(n) presser les deux plaques de bois (10, 20) pour former une plaque de contreplaqué à planches.

4. Procédé selon la revendication 1 ou 2, **caractérisé en ce qu'**il est prévu les étapes supplémentaires suivantes consistant à :
(j) subdiviser la plaque de bois (10) le long de son axe vertical (H₁₀) en une première plaque partielle (101) et une deuxième plaque partielle (102),
(k) encoller une face supérieure de l'une au moins des plaques partielles (101, 102),
(l) retourner la deuxième plaque partielle (102) autour de l'axe vertical (H₁₀),
(m) poser la deuxième plaque partielle (102) sur la face supérieure de la première plaque partielle (101) de manière à ce que les planches des plaques partielles (101, 102) se croisent,
(n) presser les deux plaques partielles (101, 102) pour former une plaque de contreplaqué à planches.

5. Procédé selon l'une des revendications précédentes, **caractérisé en ce qu'**à l'étape (c), ledit au moins un côté longitudinal (2.1, 3.1, ... x.1) est encollé d'une colle thermofusible.

6. Procédé selon l'une des revendications précédentes, **caractérisé en ce que** lesdites au moins deux plaques de bois (10, 20) ou les deux plaques partielles (101, 102) sont encollées d'une colle à bois.

7. Procédé selon l'une des revendications précédentes, **caractérisé en ce qu'**une plaque de fibres (0) est insérée entre deux planches adjacentes (1, 2, 3, ... x-1, x) et est collée à la planche (x-1) déjà présente dans le poste d'assemblage (F) et à la planche (x) insérée ultérieurement à l'étape d).

8. Procédé selon la revendication 6, **caractérisé en ce que** la plaque de fibres (0) est plus large que les planches (1, 2, 3, ... x-1, x).

9. Procédé selon la revendication 7 ou 8, **caractérisé en ce que** les plaques de bois (10, 20 ; 101, 102), pourvues des plaques de fibres (0), sont insérées entre deux plaques de bois (10, 20 ; 101, 102), dépourvues de plaques de fibres (0), et sont collées à celles-ci et pressées.

10. Dispositif de fabrication de plaques de bois pour la fabrication d'une plaque de bois (10) rectangulaire, comprenant:
(a) un dispositif de délignage (50) conçu pour déligner les planches (1, 2, 3, ...) sur leurs côtés transversaux (1.3, 1.4 ; 2.3, 2.4 ; 3.3, 3.4, ... x.3, x.4) selon un angle (90°-α),
(b) un dispositif d'alimentation (32) conçu pour transporter une planche délignée (2) devant un poste d'assemblage (F) et pour placer la planche délignée (2) selon un angle (α) par rapport à une direction d'insertion (R_{S}),
(c) un poste d'encollage (40) conçu pour encoller la planche délignée (2) sur au moins un côté longitudinal (2.1) tourné vers la planche (1) déjà présente dans le poste d'assemblage (F), avec une colle,
(d) un dispositif d'insertion (30) conçu pour insérer la planche délignée (2) dans le poste d'assemblage (F),
(e) le dispositif d'insertion (30) comprenant une pluralité de chariots entraîneurs (30.1, 30.2, 30.3, 30.4, 30.5, 30.6, 30.7) disposés sur une poutre de couplage (31) conçue pour parcourir dans la direction d'insertion (R_{S}) un trajet d'insertion (s) parallèle à l'orientation des côtés transversaux (1.3, 1.4 ; 2.3, 2.4 ; 3.3, 3.4 ; ...),
(f) le poste d'assemblage (F) conçu pour presser et coller la planche insérée (2) à la planche (1) déjà présente dans le poste d'assemblage (F),
(g) un dispositif de découpe (60) conçu pour découper un gousset triangulaire (10.1) par une coupe S perpendiculaire aux côtés transversaux (1.3, 1.4 ; 2.3, 2.4 ; 3.3, 3.4 ; ... x.3, x.4) à une extrémité du plaque de bois (10) pour produire un premier bord latéral à angle droit,
(h) le poste d'assemblage (F) étant conçu pour presser et coller le gousset découpé (10.1) à l'extrémité opposée de la plaque de bois (10) de manière à obtenir un deuxième bord latéral à angle droit.

11. Dispositif de fabrication de plaques de bois selon la revendication 10, **caractérisé par** un dispositif de commande (70) conçu pour commander le dispositif de délignage (50), le dispositif d'alimentation (32), le dispositif d'insertion (30), le poste d'encollage (40), le poste d'assemblage (F) et le dispositif de découpe (60), de sorte que le dispositif de fabrication de plaques de bois met en œuvre automatiquement un procédé selon l'une des revendications 1 à 9.

12. Dispositif de fabrication de plaques de bois selon l'une des revendications 10 ou 11, **caractérisé en ce que** le dispositif d'alimentation (32) est conçu pour transporter le gousset découpé (10.1) dans la direction d'alimentation (Rz) devant la dernière planche (x) déjà présente dans le poste d'assemblage (F).

13. Dispositif de fabrication de plaques de bois selon l'une des revendications 10 à 12, **caractérisé par**
(a) un dispositif de manutention (80) conçu pour déplacer le gousset découpé (10.1) jusque dans le poste d'encollage (40),
(b) le poste d'encollage (40) étant conçu pour encoller le gousset découpé (10.1) sur au moins un côté longitudinal tourné vers la planche (1) déjà présente dans le poste d'assemblage (F), avec une colle.

14. Dispositif de fabrication de plaques de bois selon l'une des revendications 10 à 13, **caractérisé en ce que** les chariots entraîneurs (30.1, 30.2, 30.3, 30.4, 30.5, 30.6, 30.7) comprennent chacun un entraîneur arrière (30.11, ... 30.71) dans la direction d'insertion (Rs) et un entraîneur avant (30.12, ... 30.72) dans la direction d'insertion (Rs), sachant que les entraîneurs arrière (30.11, ... 30.71) et les entraîneurs avant (30.12, ... 30.72) peuvent être amenés dans une position engagée et dans une position désengagée, que les entraîneurs arrière (30.11, ... 30.71) sont, en vue de dessus, parallèles entre eux et perpendiculaires à la direction d'insertion (Rs) et que les entraîneurs avant (30.12, ... 30.72) sont, en vue de dessus, disposés en diagonale selon l'angle (α).
